# EUROPÄISCHE PATENTSCHRIFT

(11) **EP 3 341 271 B1**
(45) Veröffentlichungstag und Bekanntmachung des Hinweises auf die Patenterteilung: **17.02.2021**
(21) Anmeldenummer: 16757225.4
(22) Anmeldetag: 24.08.2016
(51) Int. Cl.: B62J 1/18, B62J 1/00

(54) **FAHRRADSATTEL SOWIE VERFAHREN ZUR HERSTELLUNG EINES FAHRRADSATTELS**
BICYLE SEAT AND METHOD FOR PRODUCING A BICYCLE SADDLE
SELLE DE BICYCLETTE ET PROCÉDÉ DE FABRICATION D'UNE SELLE DE BICYCLETTE

(30) Priorität: 25.08.2015 DE 202015005873 U
(43) Veröffentlichungstag der Anmeldung: 04.07.2018
(60) Teilanmeldung: 20211832.9
(73) Patentinhaber: Ergon International GmbH, 56070 Koblenz (DE)
(72) Erfinder: KRAUSE, Andreas, 56068 Koblenz (DE)
(74) Vertreter: dompatent von Kreisler Selting Werner - Partnerschaft von Patent- und Rechtsanwälten mbB
(86) Internationale Anmeldenummer: PCT/EP2016/069970
(87) Internationale Veröffentlichungsnummer: WO 2017/032796

(56) Entgegenhaltungen:
- EP-A2- 0 903 321
- EP-A2- 2 085 302
- WO-A1-02/055366
- WO-A1-2009/093124
- DE-U1- 20 109 883
- DE-U1-202008 018 006
- US-A- 4 999 068

## Beschreibung

Die Erfindung betrifft einen Fahrradsattel sowie ein Verfahren zur Herstellung eines Fahrradsattels.

Fahrradsättel sind über ein an einer Unterseite einer Sattelschale angeordnetes Sattelgestell mit einer Sattelstütze verbunden. Auf der Oberseite der Sattelschale ist ein Sattelpolster zur Dämpfung angeordnet. Das Sattelpolster ist üblicherweise von einer Deckschicht oder einem Überzug bedeckt bzw. überspannt. Zur Verbesserung des Komforts von Fahrradsätteln besteht eine Vielzahl unterschiedlicher Ausgestaltungen von Fahrradsätteln. Beispielsweise sind innerhalb des Sitzpolsters Gelpads zur Verbesserung des Komforts angeordnet. Ebenso ist es bekannt, beispielsweise zwischen dem Sattelgestell und der Sattelschale insbesondere im Bereich der Sattelrückseite Dämpfungselemente vorzusehen. Die unterschiedlichsten Arten von Fahrradsätteln weisen häufig den Nachteil auf, dass der Komfort relativ gering ist und/oder die Sättel ein hohes Gewicht aufweisen.

Aus EP 2085302 ist ein Fahrradsattel mit dem Merkmal des Oberbegriffs des Anspruchs 1 bekannt, wobei zwischen zwei schalenförmigen Elementen ein Element zur Belüftung vorgesehen ist. Dokument DE202008018006U1 zeigt ebenfalls den Oberbegriff des Anspruchs 1.

Aufgabe der Erfindung ist einen Fahrradsattel und/oder ein Verfahren zur Herstellung eines Fahrradsattels mit guten Komforteigenschaften zu schaffen.

Die Lösung der Aufgabe erfolgt erfindungsgemäß durch einen Fahrradsattel gemäß Anspruch 1 bzw. durch ein Verfahren zur Herstellung eines Fahrradsattels gemäß Anspruch 18.

Der Fahrradsattel weist eine Sattelschale auf. Diese ist vorzugsweise aus einem harten Kunststoff hergestellt. Mit einer Oberseite der Sattelschale kann ein Sitzpolster verbunden. Dies kann gegebenenfalls von einer Deckschicht überspannt sein. Ferner kann das Sitzpolster unterschiedliche Härtebereiche, z. B. unterschiedliche Dicken und/oder Ausnehmungen aufweisen. Ferner kann das Sitzpolster, insbesondere partiell aus unterschiedlichen Materialien hergestellt sein. Erfindungsgemäß weist der Fahrradsattel ferner ein Trägerelement auf. Das Trägerelement dient zur Verbindung mit einem Sattelgestell. Das Sattelgestell dient zur Verbindung mit einer Sattelstütze. Gegebenenfalls kann auch eine unmittelbare Verbindung der Sattelstütze mit dem Trägerelement erfolgen. Ferner ist es möglich, dass das Sattelgestell als Verbindungselement zwischen der Sattelstütze und dem Trägerelement ausgebildet ist bzw. als Verbindungselement dient.

Erfindungsgemäß ist zwischen dem vorzugsweise wiederum aus relativ steifem Material, insbesondere Kunststoff hergestellten Trägerelement und der Sattelschale ein Elastomerkörper angeordnet. Hierdurch erfolgt eine Entkopplung der das Sitzpolster tragenden Sattelschale von dem im Wesentlichen starr mit der Sattelstütze verbundenen Trägerelement. Hierdurch ist es insbesondere möglich, dass die Sattelschale in Fahrtrichtung seitlich verkippt werden kann bzw. ein seitliches Verkippen der Sattelschale um ihre Längsachse, die in Fahrtrichtung weist, möglich ist. Dies erhöht bei Tretbewegungen den Komfort, da die Sattelschale die Beckenbewegung des Benutzers zumindest teilweise mitmacht bzw. sich synchron zum Becken bewegt. Hierdurch ist insbesondere auch eine Vergleichmäßigung der Druckverteilung während des Tretens erzielt. Insbesondere ist es auch möglich, mit Hilfe eines erfindungsgemäß aufgebauten Sattels Asymmetrie in dem Körper des Benutzers, wie beispielsweise ein kürzeres Bein oder ein Schiefstellung der Hüfte auszugleichen. Dies erfolgt automatisch aufgrund der Beweglichkeit der Sattelschale gegenüber dem Trägerelement. Hierdurch werden insbesondere bei Benutzung mit asymmetrischem Körper auftretende gegebenenfalls schmerzhafte Belastungen und Druckstellen vermieden.

Vorzugsweise erfolgt bei dem erfindungsgemäßen Fahrradsattel mit Hilfe des Sitzpolsters ein Einstellen des Sitzkomforts. Dies kann insbesondere durch Wahl des Polstermaterials und/oder der geometrischen Ausgestaltung des Polsters erfolgen. So können unterschiedliche Bereiche aus vorzugsweise unterschiedlichem Material hergestellt sein. Auch kann das Material beispielsweise an unterschiedlichen Bereichen unterschiedlich verdichtet sein, so dass unterschiedliche Polsterzonen realisiert sind. Auch können Ausnehmungen und dergleichen im Sattelpolster zur Verbesserung des Sitzkomforts angeordnet sein. Zusätzlich erfolgen durch das Vorsehen des elastomeren Körpers zwischen der Sattelschale und dem Trägerelement eine Dämpfung sowie das Ermöglichen einer Kippbewegung der Sattelschale um die Längsachse.

Der Elastomerkörper ist vorzugsweise elastisch verformbar, so dass eine Relativbewegung zwischen dem Trägerelement und der Sattelschale ermöglicht ist. Hierbei ist es insbesondere möglich zur Ausgestaltung von Sätteln mit unterschiedlichen Komforteigenschaften Elastomerkörper aus unterschiedlichem Material vorzugsehen. Bevorzugt ist die Verwendung von Schäumen, wie PU-Schäumen. Insbesondere sind geschlossenporige Schäume bevorzugt. Der Elastomerkörper weist insbesondere TPU (thermoplastisches Polyurethan) auf und ist besonders bevorzugt aus diesem Material hergestellt. Besonders geeignet ist hierfür das von der Firma BASF unter dem Produktnamen "Infinergy" hergestellte Material. Verfahren zur Herstellung von TPU sind beispielsweise in EP 692 510, WO 00/44821, EP 11 74 459 und EP 11 74 458 beschrieben. Ferner ist es bevorzugt, dass der Elastomerkörper aus EVA (Ethylenvinylacetat) hergestellt ist, bzw. EVA aufweist. Ferner können als Materialien EPP (expandiertes Polypropylen), TPE (thermoplastische Elastomere) und EPE (expandiertes Polyethylen) verwendet werden. Auch eine Kombination dieser beiden Materialien miteinander oder in Kombination der Materialien mit anderen Materialien ist möglich. Hierdurch können unterschiedliche Dämpfungs- und Bewegungseigenschaften des Elastomerkörpers erzielt werden. Auch ist es möglich, die entsprechenden Materialien in unterschiedlichen Bereichen stärker zu verdichten, so dass hierdurch die Dämpfungs- und Bewegungseigenschaften beeinflusst werden können.

Der Elastomerkörper weist insbesondere in einem Sitzbereich des Sattels ein Elastizitätsmodul von 0,1 bis 10 MPa, insbesondere 0,1 bis 5 MPa und besonders bevorzugt 0,1 bis 1,0 MPa auf. Das besonders bevorzugte Material Infinergy E-TPU weist ein Elastizitätsmodul von 0,1 bis 0,5 MPa auf. Geeignetes Material ist insbesondere auch TPE (E-Modul: 1,0 bis 2,0 MPa). Das Reboundverhalten des Elastomerkörpers liegt vorzugsweise im Bereich von vorzugsweise mehr als 30%, insbesondere mehr als 40% und besonders bevorzugt mehr als 50% auf.

Erfindungsgemäss sind das Trägerelement und die Sattelschale ausschließlich über den Elastomerkörper miteinander verbunden, um ein gute Entkopplung von Trägerelement und Sattelschale zu realisieren. Eine gegebenenfalls zusätzlich vorgesehene Verbindung ist hierbei vorzugsweise derart gewählt, dass hierdurch die Entkopplungs- und Dämpfungseigenschaften nicht oder nur geringfügig beeinträchtigt werden. Sofern eine Verbindung zwischen Sattelschale und Trägerelement vorgesehen sein sollte, ist es ferner bevorzugt diese im Bereich einer Sattelspitze vorzusehen, so dass die Entkopplung im Bereich einer Sattelrückseite bzw. eines Sitzbereichs des Sattels weiterhin gewährleistet ist. Insbesondere in diesem Bereich ist die Entkopplung erfindungsgemäß vorteilhaft, da hierdurch ein Verkippen des Sattels insbesondere in diesem Bereich um seine Längsachse zum Ausgleich von Beckenbewegungen möglich ist.

Das Trägerelement und/oder die Sattelschale sind vorzugsweise aus steiferem Material hergestellt als der Elastomerkörper. Bevorzugt ist zur Herstellung des Trägerelements und/oder der Sattelschale die Verwendung von Kunststoff, der gegebenenfalls faserverstärkt sein kann. Das Trägerelement und/oder das Sattelelement weisen vorzugsweise PP, PA6 oder PA12 auf oder sind aus diesen Materialien hergestellt. Das Elastizitätsmodul des Trägerelements und der Sattelschale liegt vorzugsweise im Bereich von 1000 bis 10000 MPa, vorzugsweise 2500 bis 6.000 MPa und besonders bevorzugt im Bereich von 3000 bis 5000 MPa. Bevorzugt ist die Verwendung von PP (E-Modul: 1100 bis 1450 MPa), PP GF20 (E-Modul: ca. 2900 MPa) und/oder PA6 GF15 (E-Modul: 4500 bis 6500 MPa).

Die Verbindung des Sattelgestells mit dem Trägerelement erfolgt in bevorzugter Ausführungsform derart, dass das Sattelgestell, insbesondere ein vorderes Verbindungselement des Sattelgestells mit der Sattelspitze, das heißt einem in Fahrtrichtung nach vorne weisenden Bereich des Sattels verbunden ist. Des Weiteren ist es bevorzugt, dass das Sattelgestell insbesondere ein hinteres Verbindungselement des Sattelgestells mit einer Sattelrückseite, das heißt einer entgegen der Fahrtrichtung weisenden Rückseite des Trägerelements verbunden ist. Das Sattelgestell weist des Weiteren vorzugsweise zwei Streben auf. Diese können im vorderen Bereich gemeinsam mit dem Trägerelement verbunden sein. Gegebenenfalls sind die beiden Sattelstreben im vorderen Bereich auch vor dem Verbinden mit dem Trägerelement zusammengeführt. Die Verbindung im Bereich der Sattelrückseite erfolgt bei zwei Streben vorzugsweise getrennt. In diesem Fall weist das hintere Verbindungselement zwei gesonderte Verbindungsteile auf.

Die Verbindung des Sattelgestells mit dem Trägerelement im Bereich der Vorderseite und der Rückseite des Sattels verbessert den Komfort, da zwischen den beiden Verbindungsbereichen eine elastische Verformung des Sattels möglich ist. Wenngleich diese aufgrund der höheren Steifigkeit des Trägerelements geringer ist als die Verformungsmöglichkeit des Elastomerkörpers ist es bevorzugt, dass das Trägerelement aus einem Material hergestellt ist, das bei herkömmlicher Belastung während des Fahrradfahrens eine elastische Verformung ermöglicht, so dass der Komfort weiter verbessert ist.

Das Trägerelement erstreckt sich erfinungsgemäss von der Sattelspitze bis zu der Sattelrückseite und stellt insbesondere eine Verbindung zwischen dem vorderen und dem hinteren Aufnahmeelement des Sattelgestells dar. Gegebenenfalls kann das Sattelgestell im Bereich der Sattelspitze auch mit der Sattelschale verbunden sein. Dies ist insbesondere dann gegeben, wenn im Bereich der Sattelstütze kein Trägerelement vorgesehen ist. Das in Fahrtrichtung vordere Ende des Trägerelements kann sodann beispielsweise mit der Sattelschale oder über ein Zwischenelement mit dem Sattelgestell verbunden sein.

Besonders bevorzugt ist es, dass das Trägerelement einstückig ausgebildet ist. Ferner ist es bevorzugt, dass sich das Trägerelement in Längsrichtung über die gesamte Länge des Sattels erstreckt und insbesondere sowohl an der Sattelrückseite als auch an der Sattelspitze mit dem Sattelgestell verbunden ist. Insbesondere kann das Trägerelement ähnlich einer Sattelschale Bereiche mit unterschiedlicher Elastizität aufweisen. Dies kann durch die Verwendung unterschiedlicher Materialien und/oder unterschiedlicher Materialdicken erzielt werden. Hierdurch kann insbesondere die Elastizität bzw. Nachgiebigkeit des Trägerelements dem gewünschten Komfort angepasst werden. Insbesondere ein Durchbiegen des Trägerelements um eine Achse quer zur Längsrichtung des Sattels kann hierdurch variiert werden.

In einer besonders bevorzugten Ausführungsform der Erfindung erstreckt sich der Elastomerkörper über einen Sitzbereich des Fahrradsattels vollständig. Der Sitzbereich des Fahrradsattels ist hierbei der verbreiterte Bereich des Sattels in dem die Sitzknochen des Benutzers angeordnet sind. Des Weiteren ist es bevorzugt, dass sich der Elastomerkörper über eine Sattelspitze des Fahrradsattels und/oder über einen Mittelbereich des Fahrradsattels vollständig erstreckt. Besonders bevorzugt ist eine Kombination dieser Ausführungsformen, also dass sich der Elastomerkörper sowohl über den Sitzbereich, die Sattelspitze als auch den Mittelbereich erstreckt. Hierbei ist es bevorzugt, dass der Elastomerkörper einstückig ausgebildet ist.

Im Sitzbereich ist es bevorzugt, dass der Elastomerkörper einen Großteil einer Unterseite der Sattelschale, insbesondere die gesamte Unterseite der Sattelschale bedeckt. Zumindest bedeckt der Elastomerkörper mindestens 70%, vorzugsweise mindestens 80% und besonders bevorzugt mindestens 90% der Unterseite der Sattelschale. Des Weiteren ist es bevorzugt, dass der Elatomerkörper im Bereich der Sattelspitze, d.h. im vorderen Bereich des Fahrradsattels die Unterseite der Sattelschale zu einem wesentlichen Teil, insbesondere vollständig bedeckt. Insbesondere bedeckt der Elastomerkörper im Bereich der Sattelspitze die Unterseite der Sattelschale um mindestens 70%, vorzugsweise mindestens 80% und besonders bevorzugt mindestens 90%. Entsprechend ist es bevorzugt, dass der Elastomerkörper auch im Mittelbereich, d.h. dem Bereich des Fahrradsattels zwischen dem Sitzbereich und der Sattelspitze vorgesehen ist. Hierbei ist es wiederum bevorzugt, dass der Elastomerkörper im Mittelbereich die Unterseite der Sattelschale im Wesentlichen insbesondere vollständig bedeckt. Bevorzugt ist ein Bedecken der Unterseite der Sattelschale im Mittelbereich um insbesondere mindestens 70%, bevorzugt mindestens 80% und besonders bevorzugt mindestens 90% vorgesehen.

In einer weiteren besonders bevorzugten Ausführungsform entspricht die Außenkontur des Elastomerkörpers im Wesentlichen der Außenkontur des Fahrradsattels, insbesondere der Sattelschale. Gegebenenfalls sind die Abmessungen des Elasomerkörpers etwas kleiner als die Außenabmessungen des Fahrradsattels bzw. der Sattelschale. Beispielsweise ist die Außenkontur des Fahrradsattels umlaufend 2 bis 3 mm breiter als die Außenkontur des Elastomerkörpers.

Bei einer weiteren bevorzugten Ausführungsform erstreckt sich die Sattelschale über einen Sitzbereich des Fahrradsattels vollständig. Hierdurch kann insbesondere die von den Sitzknochen auf den Sattel übertragene Kraft gut aufgenommen werden. Bevorzugt ist es eine derartige Sattelschale mit einem sich ebenfalls vollständig über den gesamten Sitzbereich erstreckenden Elastomerkörper zu verbinden.

Der Elastomerkörper überdeckt hierbei vorzugsweise den gesamten Fahrradsattel. Je nach verwendetem Material ist es bevorzugt, dass der Elastomerkörper eine Dicke von 5 bis 15 mm, insbesondere 5 bis 10 mm aufweist. Es ist besonders bevorzugt, dass insbesondere der Elastomerkörper und besonders bevorzugt dessen Dicke und Material derart gewählt ist, dass seitliche Randbereiche des Sitzbereichs um bis zu 5mm durch die Belastung des Benutzers nach unten bewegt werden können.

Des Weiteren ist es bevorzugt, dass sich die Sattelschale über die Sattelspitze und/oder den Mittelbereich des Sattels, insbesondere vollständig erstreckt. Bei entsprechender Ausgestaltung des Elasomerkörpers ist es hierbei wiederum bevorzugt, dass die Außenkontur der Sattelschale derjenigen des Elastomerkörpers entspricht. Insbesondere ist die Sattelschale einstückig ausgebildet und erstreckt sich in besonders bevorzugter Ausführungsform über den Sitzbereich, den Mittelbereich und den Bereich der Sattelspitze. Hierbei ist es wiederum bevorzugt, dass der Elastomerkörper ebenfalls einstückig ausgebildet ist und sich über diese drei Bereiche des Sattels erstreckt. Eine Außenkontur der Sattelschale entspricht in besonders bevorzugte Ausführungsform der Außenkontur des Elastomerkörpers.

Die Sattelschale, die in bevorzugter Ausführungsform aus härterem bzw. steiferen Material als der Elastomerkörper hergestellt ist, kann ähnlich dem Trägerelement Bereiche aufweisen, die aus unterschiedlichem Material hergestellt sind und/oder eine unterschiedliche Dicke aufweisen. Beispielsweise ist es wie auch bei dem Trägerelement möglich, Stege, Verdickungen und dergleichen vorzusehen. Hierdurch können die Elastizitätseigenschaften in unterschiedlichen Bereichen variiert werden und somit der Komfort des Fahrradsattels je nach der Anforderung, für die das entsprechende Sattelmodell hergestellt wurde, variiert werden.

In besonders bevorzugter Ausführungsform des erfindungsgemäßen Fahrradsattels ist das Trägerelement im Sitzbereich angeordnet und insbesondere der Sattelschale gegenüberliegend vorgesehen.

Die Größe des Trägerelements im Sitzbereich beträgt mindestens 70%, insbesondere mindestens 80% und besonders bevorzugt mindestens 90% der Größe der Sattelschale im Sitzbereich. Bei der Größe handelt es sich hierbei insbesondere um die im montierten Zustand des Sattels auf eine Horizontalebene projizierte Fläche.

Vorzugsweise ist das Trägerelement auch im Bereich der Sattelspitze, insbesondere Sattelschale gegenüberliegend angeordnet. Die Größe des Trägerelements in diesem Bereich entspricht vorzugsweise wiederum mindestens 70%, insbesondere mindestens 80% und besonders bevorzugt mindestens 90% der Größe der Sattelschale im Bereich der Sattelspitze.

Des Weiteren ist es besonders bevorzugt, dass das Trägerelement insbesondere zusätzlich auch im Mittelbereich des Sattels, d.h. im Bereich zwischen der Sattelspitze und dem Sitzbereich angeordnet ist. Die Größe des Trägerelements beträgt vorzugsweise mindestens wiederum 70%, insbesondere mindestens 80% und besonders bevorzugt mindestens 90% der Größe der Sattelschale in diesem Bereich.

Besonders bevorzugt ist es, dass das Trägerelement schalenförmig ausgebildet ist. Insbesondere weist das Trägerelement einen Sitzbereich, einen Mittelbereich und einen Bereich einer Sattelspitze auf, wobei diese drei Bereiche vorzugsweise einstückig sind, so dass ein einziges gemeinsames Trägerelement vorgesehen ist. Die Größe des Trägerelements beträgt vorzugsweise mindestens 70%, insbesondere mindestens 80% und besonders bevorzugt mindestens 90% der Größe der gesamten Sattelschale. Die vorstehenden Größenangaben verstehen sich immer in der entsprechend projizierten Fläche.

In bevorzugter Ausführungsform weist das Trägerelement ein von der Sattelschale wegweisendes, bzw. in montiertem Zustand nach unten weisendes Träger-Randelement auf. Das Randelement ist vorzugsweise im Sitzbereich und/oder im Mittelbereich und/oder im Bereich der Sattelspitze und/oder im Bereich der Rückseite des Sattels angeordnet. Bevorzugt ist es, dass bezogen auf die Längsachse des Fahrradsattels das Träger-Randelement symmetrisch, d.h. einander gegenüberliegend angeordnet ist. In einer besonders bevorzugten Ausführungsform ist das Randelement umlaufend, d.h. insbesondere ohne Unterbrechungen ausgebildet. Die Höhe des Randelements kann in sämtlichen unterschiedlichen Ausführungsformen variieren. Insbesondere weist das Randelement eine Höhe von 3 bis 5 mm auf. Gegebenenfalls kann das Randelement in unterschiedlichen Bereichen auch unterschiedliche Höhen aufweisen. Hierdurch kann beispielsweise die Steifigkeit des Trägerelements auf einfache Weise beeinflusst werden.

In einer weiteren bevorzugten Ausführungsform weist die Sattelschale ein Schalen-Randelement auf. Das Schalen-Randelement weist in Richtung des Trägerelements bzw. bei montiertem Sattel nach unten. Das Schalen-Randelement kann zusätzlich oder anstelle eines Träger-Randelements vorgesehen sein. Das Schalen-Randelement ist vorzugsweise im Sitzbereich und/oder im Mittelbereich und/oder im Bereich der Sattelspitze und/oder im Bereich der Sattelrückseite angeordnet. Bevorzugt ist es, dass das Schalenrandelement umlaufend ausgebildet ist. Die Höhe des Schalen-Randelements kann variieren und insbesondere in unterschiedlichen Bereichen unterschiedlich ausgestaltet sein. Die Höhe des Randelements liegt vorzugsweise im Bereich von 3 bis 5 mm. Das Schalen-Randelement ist vorzugsweise derart ausgebildet, dass es symmetrisch zur Längsachse des Sattels ist, d.h. stets einander gegenüberliegende Schalen-Randelemente vorgesehen sind. Die Höhe des Schalen-Randelements kann variieren. Hierdurch können die Elastizitätseigenschaften der Sattelschale verändert werden. Insbesondere wenn sowohl ein Träger-Randelement als auch ein Schalen-Randelement vorgesehen ist, ist es bevorzugt, dass die entsprechenden Bereiche der einzelnen Randelemente derart gewählt sind, dass stets einander gegenüberliegende Randelemente vorgesehen sind. Ist beispielsweise im Sitzbereich ein Träger-Randelement vorgesehen, ist es bevorzugt, dass im Sitzbereich auch ein Schalen-Randelement vorgesehen ist. Des Weiteren ist es bevorzugt, dass einander gegenüberliegende Randelemente im Wesentlichen dieselbe Höhe aufweisen.

Bei einer weiteren bevorzugten Ausführungsform des erfindungsgemäßen Fahrradsattels ist insbesondere im Mittelbereich des Fahrradsattels ein mit dem Träger-Randelement und/oder dem Schalen-Randelement verbundenes Halteelement angeordnet. Das Halteelement dient insbesondere zum Greifen des Sattels, beispielsweise zum Hochheben oder Tragen des Fahrrads. Das Halteelement ist hierbei vorzugsweise derart ausgebildet, dass es einen Bereich zwischen dem Trägerelement und der Sattelschale zumindest teilweise überbrückt bzw. abdeckt. Hierdurch ist insbesondere beim Tragen oder Heben des Fahrrads am Fahrradsattel ein Beschädigen des Elastomerkörpers vermieden. Vorzugsweise ist das Halteelement nur an einem der beiden Randelemente angeordnet, so dass über das Halteelement keine Verbindung der Sattelschale mit dem Trägerelement erfolgt. Dies würde die Dämpfungseigenschaften des Elastomerkörpers gegebenenfalls beeinflussen. Sofern eine Verbindung der Sattelschale mit dem Trägerelement über das Halteelement besteht, ist das Halteelement vorzugsweise aus einem entsprechend elastischen Material ausgebildet, so dass allenfalls eine geringe Beeinflussung der Elastizität des Elastomerkörpers bzw. der Bewegungsmöglichkeit der Sattelschale gegenüber dem Trägerelement erfolgt.

Besonders bevorzugt ist es, dass das Halteelement mit einem Träger-Randelement verbunden ist. Sofern kein Träger-Randelement vorhanden ist, ist es bevorzugt, dass das Halteelement direkt mit dem Trägerelement verbunden ist. Hierdurch besteht die Möglichkeit das Fahrrad an dem Trägerelement zu halten bzw. hoch zu heben, ohne dass der Elastomerkörper beschädigt wird. Es wirken somit beim Tragen keine Kräfte auf den Elastomerkörper. Vorzugsweise sind zwei, insbesondere einander gegenüberliegende Halteelemente im Mittelbereich des Fahrradsattels angeordnet. Zusätzlich kann ein derartiges Halteelement beispielsweise auch im Bereich der Sattelrückseite vorgesehen sein. Das Halteelement erstreckt sich vorzugsweise über mindestens 50%, insbesondere über mindestens 75% des Mittelbereichs, d.h. der Abmessungen des Mittelbereichs in Längsrichtung des Sattels.

Bei einer weiteren bevorzugten Ausführungsform der Erfindung weist der Elastomerkörper einen Ansatz auf, der vorzugsweise einstückig mit dem Elastomerkörper ausgebildet ist. Der Ansatz erstreckt sich zumindest teilweise zwischen dem Träger-Randelement und dem Schalen-Randelement. Die Höhe des Ansatzes entspricht hierbei vorzugsweise der Höhe der Randelemente in diesem Bereich. Sofern in diesem Bereich nur ein Träger-Randelement oder nur ein Schalen-Randelement vorgesehen ist, weist der Ansatz vorzugsweise eine entsprechende Höhe dieses Randelements auf.

Der Elastomerkörper, der zwischen der Sattelschale und dem Trägerelement angeordnet ist, ist vorzugsweise mit beiden Elementen fest verbunden. Der Elastomerkörper bedeckt mindestens 70%, insbesondere mindestens 80% und insbesondere mindestens 90% und besonders bevorzugt mindestens 100% der Unterseite der Sattelschale. Bevorzugt ist es ferner, dass der Elastomerkörper mindestens 70%, insbesondere mindestens 80% und insbesondere mindestens 90% und besonders bevorzugt mindestens 100% einer Oberseite des Trägerelements bedeckt. Hierdurch sind eine gute Verbindung zwischen der Sattelschale und dem Trägerelement hergestellt und gute Dämpfungseigenschaften realisiert.

Bei einer weiteren besonders bevorzugten Ausführungsform ist der Elastomerkörper zumindest teilweise in Seitenansicht des Fahrradsattels sichtbar. Dies ist insbesondere je nach Ausgestaltung der Randelemente auf einfache Weise möglich. Dies hat den Effekt, dass die Dämpfungscharakteristik des Sattels unmittelbar für den Benutzer sichtbar ist. Auch die doppelschalige Ausgestaltung des Sattels durch Vorsehen einer Sattelschale und eines gegenüberliegenden Trägerelements ist hierdurch gut sichtbar.

Erfindungsgemäss ist der Fahrradsattel derart ausgestaltet, dass die Sattelschale gegenüber dem Trägerelement bei Belastung, d.h. bei Benutzung um eine sich in Fahrtrichtung erstreckende Längsachse des Sattels schwenkbar ist. Insbesondere ist ein Schwenken der Sattelschale gegenüber dem Trägerelement um 2° bis 10° und besonders bevorzugt um 2° bis 5° gewährleistet.

Erfindungsgemäss ist der Elastomerkörper flächig mit einer Unterseite der Sattelschale verbunden. Erfindungsgemäss besteht ebenfalls eine flächige Verbindung zwischen dem Elastomerkörper und dem Trägerelement.

Bei einer bevorzugten Weiterbildung der Erfindung ist die Sattelschale nicht eben ausgestaltet, sondern weist gekrümmte Bereiche auf. Insbesondere an der Außenseite des Sattels ist es bevorzugt, dass die Sattelschale einen nach unten weisenden Rand aufweist. Hierdurch ist die seitliche Steifigkeit des Sattels verbessert. Bei einer derartigen Sattelschale entsteht unter der Sattelschale insbesondere im Sitzbereich ein Raum. Der Elastomerkörper ist in bevorzugter Ausführungsform zumindest teilweise in diesem Raum angeordnet.

Ferner betrifft die Erfindung ein Verfahren zur Herstellung eines Fahrradsattels, insbesondere eines Fahrradsattels wie vorstehend beschrieben. Die Herstellung erfolgt derart, dass die Sattelschale und das Trägerelement in eine Form, insbesondere eine Spritzform eingelegt werden. Das Einlegen erfolgt derart, dass zwischen der Sattelschale und dem Trägerelement ein Abstand angeordnet ist, wobei die beiden Elemente einander gegenüberliegend angeordnet sind, so dass eine Oberseite des Trägerelements der Unterseite der Sattelschale gegenüberliegt. Bevorzugt ist es selbstverständlich, dass die Bauteile zu einer Längsachse des Sattels symmetrisch ausgebildet und entsprechend symmetrisch angeordnet sind. Erfindungsgemäß erfolgt sodann ein Einbringen bzw. Einspritzen des Materials des Elastomerkörpers zwischen die Sattelschale und das Trägerelement. Hierfür erfolgt vorzugsweise unmittelbar ein Verbinden des Materials des Elastomerkörpers mit der Unterseite der Sattelschale bzw. der Oberseite des Trägerelements.

Anschließend oder gegebenenfalls im selben Herstellungsschritt kann auch das Sattelpolster aufgebracht bzw. aufgespritzt werden.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines Fahrradsattels,
- Fig. 2: eine schematische Seitenansicht des in Fig. 1 dargestellten Fahrradsattels,
- Fig. 3: eine schematische Schnittansicht entlang der Linie III-III in Fig. 1,
- Fig. 4: eine schematische Schnittansicht entlang der Linie IV-IV in Fig. 1,
- Fig. 5: eine schematische Schnittansicht einer alternativen Ausführungsform entlang der Linie IV-IV in Fig. 1 und
- Fig. 6: eine schematische Schnittansicht einer weiteren alternativen Ausführungsform entlang der Linie IV-IV in Fig. 1.

Ein Fahrradsattel weist in Draufsicht einen Sitzbereich 10 auf, an den sich ein Mittelbereich 12 anschließt. Der Mittelbereich 12 geht in die Sattelspitze 14 über. Hierbei ist die Sattelspitze 14 schmal ausgebildet und der Sitzbereich 12 breit ausgebildet, so dass im Sitzbereich der größte Teil des Gewichts des Fahrers insbesondere über die Sitzknochen aufgenommen wird. Der Fahrradsattel ist zu einer Mittelachse 16, die in Längsrichtung verläuft, symmetrisch ausgebildet.

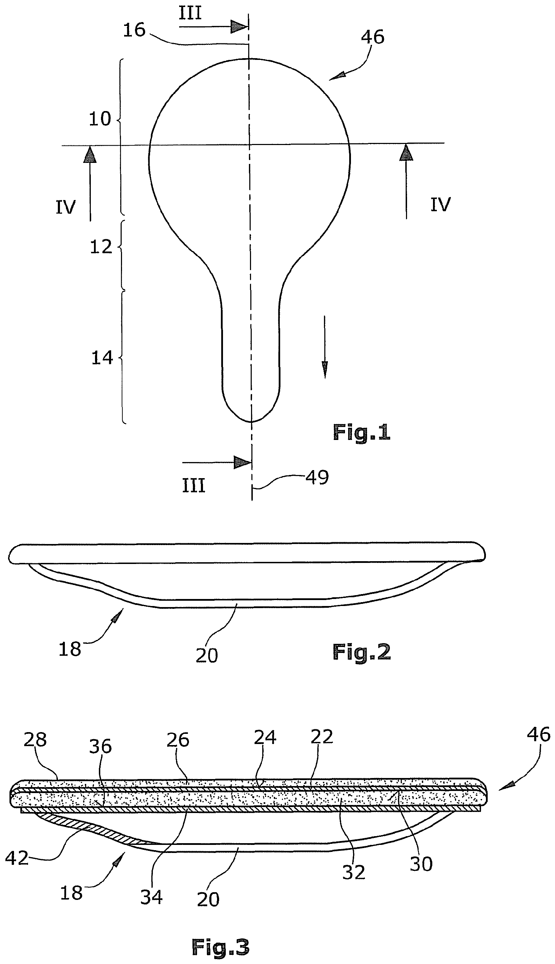

Eine Unterseite des Fahrradsattels ist mit einem Sattelgestell 18 (Fig. 2) verbunden. Die dargestellte Ausführungsform des Sattelgestells 18 weist insbesondere zwei sich im Wesentlichen in Linksrichtung des Sattels erstreckende Streben auf. In einem mittleren Bereich 20 der beiden Streben des Sattelgestells 18 ist dieses über ein Befestigungselement mit der Sattelstütze verbindbar.

Der erfindungsgemäße Fahrradsattel weist eine aus relativ steifem Material hergestellte Sattelschale 22 (Fig. 3) auf. An einer Oberseite 24 der Sattelschale 22 ist ein Sattelpolster 26 angeordnet. Dieses kann wie im dargestellten Ausführungsbeispiel von einer Deckschicht 28 überspannt sein.

An einer Unterseite 30 der Sattelschale 22 ist ein Elastomerkörper 32 angeordnet. Im dargestellten Ausführungsbeispiel erstreckt sich der Elastomerkörper 32 über die gesamte Unterseite 30 der Sattelschale 32 und ist insbesondere flächig mit dieser verbunden.

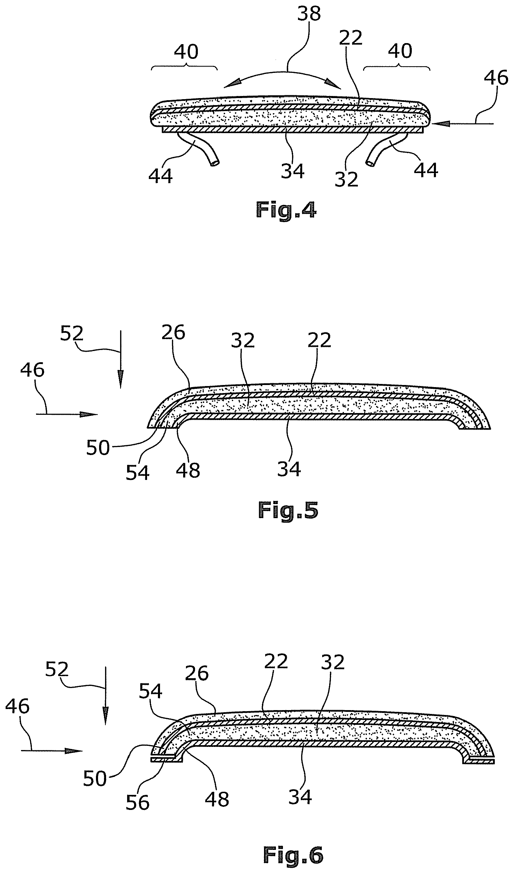

Der Sattelschale 22 gegenüber liegend ist ein Trägerelement 34 vorgesehen. Der Elastomerkörper 32 ist somit zwischen der Sattelschale 22 und dem Trägerelement 34 angeordnet. Die Verbindung zwischen einer Oberseite 36 des Trägerelements 34 und dem Elastomerkörper 32 erfolgt vorzugsweise wiederum über die gesamte Oberfläche 36. Da die Sattelschale 22 vorzugsweise nicht oder vorzugsweise nur im Bereich der Sattelspitze 14 mit dem Trägerelement 34 verbunden ist, ist die Sattelschale 22 von dem Trägerelement 34 entkoppelt. Hierdurch ist es in besonders bevorzugter Ausführungsform möglich, dass die Sattelschale 22 insbesondere im Sitzbereich 10, wie durch den Pfeil 38 (Fig. 4) angedeutet, verkippt werden kann. In äußeren Bereichen 40 des Sitzbereichs kann bei entsprechender Belastung die Sattelschale somit um beispielsweise bis zu 5 mm nachgeben. Hierdurch ist die Kippbewegung des Beckens während des Fahrradfahrens teilweise ausgeglichen bzw. der Sattel macht die Kippbewegung des Beckens mit.

Das Sattelgestell 18 ist über ein vorderes Verbindungselement 42 mit dem Trägerelement 34 im Bereich der Sattelspitze 14 verbunden. Ferner ist das Sattelgestell 18 über zwei hintere Verbindungsteile 44 mit einer Sattelrückseite 46, die sich insbesondere entgegen einer Fahrtrichtung (Fig. 1) an den Sitzbereich anschließt.

Bei der in Figur 4 dargestellten Ausführungsform ist die Sattelschale 22 gegenüber dem Trägerelement 34 auch im äußeren Randbereich 40 in einem Abstand zueinander angeordnet. Hierdurch ist der Elastomerkörper 32 in einer Seitenansicht (Pfeil 46) für den Benutzer sichtbar.

Bei einer ersten alternativen Ausführungsform (Fig. 5) weist das Trägerelement ein vorzugsweise umlaufendes Träger-Randelement 48 auf. In der dargestellten Ausführungsform weist auch die Sattelschale 22 ein insbesondere umlaufendes Schalen-Randelement 50 auf. Beide Randelemente 48, 50 weisen in montiertem Zustand nach unten (Pfeil 52). Im dargestellten Ausführungsbeispiel ist zwischen den beiden Randelementen 48, 50 ein Ansatz 54 des Elastomerkörpers 32 angeordnet. Ebenso kann auch nur eines der beiden Randelemente 48, 50 vorgesehen sein. Insbesondere können in Längsrichtung auch nur Teile mit Randelementen versehen sein. Insbesondere, wenn das Randelement 50 nicht oder zumindest in Teilbereichen nicht vorgesehen ist, ist der Elastomerkörper 32, insbesondere der Ansatz 54 des Elastomerkörpers 32 in Seitenansicht (Pfeil 46) für den Benutzer gut sichtbar.

Bei einer weiteren alternativen Ausführungsform der Erfindung (Fig. 6) sind entsprechend der in Fig. 5 dargestellten Ausführungsform Randbereiche 48, 50 vorgesehen, wobei diese wiederum nicht unbedingt umlaufend sein müssen. Zusätzlich ist im dargestellten Ausführungsbeispiel mit dem Randbereich 48 des Trägerelements 34 ein Halteelement 56, insbesondere einstückig mit dem Randelement 48 und dem Trägerelement 34 ausgebildet. Das Halteelement 46 verläuft im Wesentlichen horizontal und überdeckt den Ansatz 54 des Elastomerkörpers 32. Hierdurch ist ein einfaches Greifen des Sattels, beispielsweise zum Tragen des Fahrrads möglich, wobei sichergestellt ist, dass der Elastomerkörper hierdurch nicht belastet oder gar beschädigt wird.

Das Halteelement 56 ist vorzugsweise im Mittelbereich 12 vorgesehen und ragt in besonders bevorzugter Ausführungsform in den Sitzbereich 10. Insbesondere kann das Halteelement 56 auch umlaufend ausgebildet sein.

## Patentansprüche

1. Fahrradsattel mit
einer Sattelschale (22),
einem mit einer Oberseite (24) der Sattelschale (22) verbundenen Sattelpolster (26),
einem Trägerelement (34), das mit einem Sattelgestell (18) zur Verbindung mit einer Sattelstütze verbunden ist und
wobei sich das Trägerelement (34) von der Sattelspitze (14) bis zur Sattelrückseite (46) erstreckt, und
einem zwischen dem Trägerelement (34) und der Sattelschale (22) angeordnetem Elastomerkörper,
**dadurch gekennzeichnet, dass** der Elastomerkörper (32) zur Entkopplung der Sattelschale (22) von dem Trägerelement (34) flächig mit der Unterseite der Sattelschale (22) und dem Trägerelement (34) verbunden ist,
sodass das Trägerelement (34) und die Sattelschale (22) ausschließlich über den Elastomerkörper (32) miteinander verbunden sind und so dass die Sattelschale (22) gegenüber dem Trägerelement (34) bei Belastung um eine sich in Längsrichtung erstreckende Längsachse (49) schwenkbar ist.

2. Fahrradsattel nach Anspruch 1, **dadurch gekennzeichnet, dass** der Elastomerkörper (32) elastisch verformbar ist, so dass eine Relativbewegung zwischen Trägerelement und Sattelschale (22) ermöglicht ist.

3. Fahrradsattel nach Anspruch 1 oder 2, **dadurch gekennzeichnet, dass** das Trägerelement (34) und/oder die Sattelschale (22) aus steiferem Material als der Elastomerkörper (32) hergestellt ist.

4. Fahrradsattel nach einem der Ansprüche 1 bis 3, **dadurch gekennzeichnet, dass** das Trägerelement (34) im Sitzbereich (10) angeordnet ist, wobei vorzugsweise die Größe des Trägerelements (34) im Sitzbereich mindestens 70%, insbesondere mindestens 80%, besonders bevorzugt mindestens 90% der Größe der Sattelschale (22) beträgt.

5. Fahrradsattel nach einem der Ansprüche 1 bis 4, **dadurch gekennzeichnet, dass** Trägerelement (34) im Bereich der Sattelspitze (14) angeordnet ist, wobei vorzugsweise die Größe des Trägerelements (34) im Bereich der Sattelspitze (14) mindestens 70%, insbesondere mindestens 80%, besonders bevorzugt mindestens 90% der Größe der Sattelschale (22) beträgt.

6. Fahrradsattel nach einem der Ansprüche 1 bis 5, **dadurch gekennzeichnet, dass** das Trägerelement (34) in einem Mittelbereich (12) zwischen dem Sitzbereich (10) und dem Bereich der Sattelspitze (14) angeordnet ist, wobei vorzugsweise die Größe des Trägerelements (34) im Mittelbereich (12) mindestens 70%, insbesondere mindestens 80%, besonders bevorzugt mindestens 90% der Größe der Sattelschale (22) beträgt.

7. Fahrradsattel nach einem der Ansprüche 1 bis 6, **dadurch gekennzeichnet, dass** das Trägerelement (34) einstückig ausgebildet ist.

8. Fahrradsattel nach einem der Ansprüche 1 bis 7, **dadurch gekennzeichnet, dass** sich der Elastomerkörper (32) über einen Sitzbereich (10) des Fahrradsattels und/oder über einen Mittelbereich (12) des Fahrradsattels vollständig und/oder über einen Bereich der Sattelspitze (14) des Fahrradsattels erstreckt.

9. Fahrradsattel nach einem der Ansprüche 1 bis 8, **dadurch gekennzeichnet, dass** eine Außenkontur des Elastomerkörpers (32) und/oder eine Außenkontur der Sattelschale (22) einer Außenkontur des Fahrradsattels entspricht.

10. Fahrradsattel nach einem der Ansprüche 1 bis 9, **dadurch gekennzeichnet, dass** sich die Sattelschale (22) über einen Sitzbereich (10) des Fahrradsattels und/oder über einen Bereich der Sattelspitze (14) des Fahrradsattels und/oder über einen Mittelbereich (12) des Fahrradsattels vollständig erstreckt.

11. Fahrradsattel nach einem der Ansprüche 1 bis 10, **dadurch gekennzeichnet, dass** das Trägerelement (34) ein von der Sattelschale (22) wegweisendes bzw. nach unten weisendes Träger-Randelement (48) aufweist, das vorzugsweise im Sitzbereich (10) und/oder im Mittelbereich (12) und/oder im Bereich der Sattelspitze (14) vorgesehen ist und besonders bevorzugt umlaufend ist.

12. Fahrradsattel nach einem der Ansprüche 1 bis 11, **dadurch gekennzeichnet, dass** die Sattelschale (22) ein in Richtung des Trägerelements (34) bzw. nach unten weisendes Schalen-Randelement (50) aufweist, das vorzugsweise im Sitzbereich (10) und/oder im Mittelbereich (12) und/oder im Bereich der Sattelspitze (14) angeordnet ist und besonders bevorzugt umlaufend ist.

13. Fahrradsattel nach einem der Ansprüche 11 oder 12, **dadurch gekennzeichnet, dass** insbesondere im Mittelbereich (12) mit dem Träger-Randelement (48) und/oder dem Schalen-Randelement (50) ein Halteelement (56) verbunden ist, dass sich vorzugsweise über mindestens 50%, insbesondere mindestens 70% und besonders bevorzugt 75% des Mittelbereichs (12) erstreckt und besonders bevorzugt in den Sitzbereich (10) ragt, wobei vorzugsweise einen Abstand zwischen der Sattelschale (22) und dem Trägerelement (34), insbesondere vollständig überbrückt.

14. Fahrradsattel nach einem der Ansprüche 11 bis 13, **dadurch gekennzeichnet, dass** der Elastomerkörper (34) einen Ansatz (54) aufweist, der zumindest teilweise zwischen dem Träger-Randelement (48) und dem Schalen-Randelement (50) angeordnet ist.

15. Fahrradsattel nach einem der Ansprüche 1 bis 14, **dadurch gekennzeichnet, dass** der Elastomerkörper mindestens 70%, vorzugsweise mindestens 80%, besonders bevorzugt mindestens 90% einer Unterseite (30) der Sattelschale (22) und/oder des Trägerelements (34) bedeckt.

16. Fahrradsattel nach einem der Ansprüche 1 bis 15, **dadurch gekennzeichnet, dass** der Elastomerkörper (32) in Seitenansicht (46) des Fahrradsattels zumindest teilweise sichtbar ist.

17. Fahrradsattel nach einem der Ansprüche 1 bis 16, **dadurch gekennzeichnet, dass** die Sattelschale (22) gegenüber dem Trägerelement (34) bei Belastung um eine sich in Längsrichtung erstreckende Längsachse (49), um einen Winkel von 2° bis 10°, insbesondere 2° bis 5° schwenkbar ist.

18. Verfahren zur Herstellung eines Fahrradsattels, nach einem der Ansprüche 1 bis 17, bei welchem die Sattelschale (22) und das Trägerelement (34) in ein Formelement, insbesondere eine Spritzform in einem Abstand zueinander angeordnet werden und das Material des Elastomerkörpers (34) zwischen die Sattelschale (22) und das Trägerelement (34) eingebracht, insbesondere eingespritzt wird, wobei vorzugsweise das Sattelpolster (28) in dem Formelement, insbesondere in der Spritzform auf eine Oberseite der Sattelschale (22) aufgebracht, insbesondere aufgespritzt wird.

## Claims

1. Bicycle saddle comprising
a saddle shell (22),
a seat cushion (26) connected with an upper side (24) of the saddle shell (22),
a support element (34) connected with a saddle frame (18) for connection with a seat post, and
the support element (34) extending from the saddle tip (14) to the rear (46) of the saddle, and
an elastomeric body arranged between the support element (34) and the saddle shell (22),
**characterized in that**
the elastomeric body (32) is two-dimensionally connected with the lower side of the saddle shell (22) and the support element (34) to decouple the saddle shell (22) from the support element (34), such that the support element (34) and the saddle shell (22) are connected exclusively via the elastomeric body (32) and such that, under load, the saddle shell (22) is pivotable relative to the support element (34) about a longitudinal axis (49) extending in the longitudinal direction.

2. Bicycle saddle according to claim 1, **characterized in that** the elastomer body (32) is elastically deformable so that a relative movement between support element and saddle shell (22) is permitted.

3. Bicycle saddle according to claim 1 or 2, **characterized in that** the support element (34) and/or the saddle shell (22) are produced from more rigid material than the elastomer body (32).

4. Bicycle saddle according to one of claims 1 to 3, **characterized in that** the support element (34) is arranged in the seat region (10), wherein preferably the size of the support element (34) in the seat region is at least 70% of the size of the saddle shell (22), in particular at least 80%, particularly preferred at least 90%.

5. Bicycle saddle according to one of claims 1 to 4, **characterized in that** the support element (34) is arranged in the region of the saddle nose (14), wherein preferably the size of the support element (34) in the region of the saddle nose (14) is at least 70% of the size of the saddle shell (22), in particular at least 80%, particularly preferred at least 90%.

6. Bicycle saddle according to one of claims 1 to 5, **characterized in that** the support element (34) is arranged in a center region between the seat region (10) and the region of the saddle nose (14), wherein preferably the size of the support element (34) in the center region (12) is at least 70% of the size of the saddle shell (22), in particular at least 80%, particularly preferred at least 90%.

7. Bicycle saddle according to one of claims 1 to 6, **characterized in that** the support element (34) is embodied in a single piece.

8. Bicycle saddle according to one of claims 1 to 7, **characterized in that** the elastomer body (32) extends completely across a seat region (10) of the bicycle saddle and/or across a center region (12) of the bicycle saddle and/or across a region of the saddle nose (14) of the bicycle saddle.

9. Bicycle saddle according to one of claims 1 to 8, **characterized in that** an outer contour of the elastomer body (32) and/or an outer contour of the saddle shell (22) corresponds to an outer contour of the bicycle saddle.

10. Bicycle saddle according to one of claims 1 to 9, **characterized in that** the saddle shell (22) extends completely across a seat region (10) of the bicycle saddle and/or across a region of the saddle nose (14) of the bicycle saddle and/or a center region (12) of the bicycle saddle.

11. Bicycle saddle according to one of claims 1 to 10, **characterized in that** the support element (34) has a support edge element (48) that faces away from the saddle shell or faces downward, said support edge element being preferably provided in the seat region (10) and/or in the center region (12) and/or in the region of the saddle nose (14) and, as is particularly preferred, is continuous.

12. Bicycle saddle according to one of claims 1 to 11, **characterized in that** the saddle shell (22) has a shell edge element (50) that faces towards the support element (34) or faces downward, said shell edge element being preferably provided in the seat region (10) and/or in the center region (12) and/or in the region of the saddle nose (14) and, as is particularly preferred, is continuous.

13. Bicycle saddle according to one of claims 11 or 12, **characterized in that** a handle element (56) is connected to the support edge element (48) and/or the shell edge element (50), in particular in the center region (12), said handle element preferably extending across at least 50% of the center region (12), in particular at least 70% and particularly preferably 75% and particularly preferably projects into the seat region (10), said handle element preferably bridging an interval between the saddle shell (22) and the support element (34), in particular completely.

14. Bicycle saddle according to one of claims 11 to 13, **characterized in that** the elastomer body (34) has an element (54), at least part of which is arranged between the support edge element (48) and the shell edge element (50).

15. Bicycle saddle according to one of claims 1 to 14, **characterized in that** the elastomer body covers at least 70% of a lower side (30) of the saddle shell (22) and/or the support element (34), preferably at least 80%, particularly preferably at least 90%.

16. Bicycle saddle according to one of claims 1 to 15, **characterized in that** the elastomer body (32) is visible at least in part when the bicycle saddle is viewed from the side (46).

17. Bicycle saddle according to one of claims 1 to 16, **characterized in that** when loaded. the saddle shell (22) is able to pivot relative to the support element (34) by an angle of 2° to 10°, in particular 2° to 5°, about a longitudinal axis (49) extending in the longitudinal direction (48).

18. Method for producing a bicycle saddle, in particular according to any of claims 1 to 17, in which the saddle shell (22) and the support element (34) are arranged at an interval to another in a mold element, in particular in an injection die, and the material of the elastomer body (32) is added, in particular injected, between the saddle shell (22) and the support element (34), wherein preferably the seat cushion (28) is applied to, in particular sprayed onto, an upper side of the saddle shell (22) in the mold element, in particular in the injection die.

## Revendications

1. Selle de bicyclette avec
une coque de selle (22),
un rembourrage de selle (26) relié à un côté supérieur (24) de la coque de selle (22),
un élément de support (34) qui est connecté à un cadre de selle (18) pour une connexion à une tige de selle et
l'élément de support (34) s'étendant de la pointe de selle (14) au côté arrière de selle (46), et
un corps en élastomère agencé entre l'élément de support (34) et la coque de selle (22),
**caractérisée en ce que**
le corps en élastomère (32), pour désaccoupler la coque de selle (22) de l'élément de support (34), est relié de manièresurfacique à la face inférieure de la coque de selle (22) et à l'élément de support (34),
de sorte que l'élément de support (34) et la coque de selle (22) soient reliés l'un à l'autre exclusivement via le corps en élastomère (32) et
de sorte que la coque de selle (22) puisse pivoter par rapport à l'élément de support (34), sous l'action d'une contrainte, autour d'un axe longitudinal (49) s'étendant dans la direction longitudinale.

2. Selle de bicyclette selon la revendication 1, **caractérisée en ce que** le corps en élastomère (32) est déformable élastiquement, de sorte qu'un déplacement relatif entre l'élément de support et la coque de selle (22) soit rendu possible.

3. Selle de bicyclette selon la revendication 1 ou 2, **caractérisée en ce que**
l'élément de support (34) et/ou la coque de selle (22) sont réalisés en un matériau plus rigide que le corps en élastomère (32).

4. Selle de bicyclette selon l'une des revendications 1 à 3, **caractérisée en ce que** l'élément de support (34) est agencé dans la zone d'assise (10), de préférence la taille de l'élément de support (34) dans la zone d'assise est égale à au moins 70 %, en particulier à au moins 80 %, de manière particulièrement préférée à au moins 90 % de la taille de la coque de selle (22).

5. Selle de bicyclette selon l'une des revendications 1 à 4, **caractérisée en ce que** l'élément de support (34) est disposé dans la région de la pointe de selle (14), la taille de l'élément de support (34) dans la région de la pointe de selle (14) représentant de préférence au moins 70 %, en particulier au moins 80 %, de manière particulièrement préférée au moins 90 % de la taille de la coque de selle (22).

6. Selle de bicyclette selon l'une des revendications 1 à 5, **caractérisée en ce que** l'élément de support (34) est agencé dans une zone médiane (12) entre la zone d'assise (10) et la zone de la pointe de selle (14), la taille de l'élément de support (34) dans la zone médiane (12) représentant de préférence au moins 70 %, en particulier au moins 80 %, de manière particulièrement préférée au moins 90 % de la taille de la coque de selle (22).

7. Selle de bicyclette selon l'une des revendications 1 à 6, **caractérisée en ce que** l'élément de support (34) est formé d'une seule pièce.

8. Selle de bicyclette selon l'une des revendications 1 à 7, **caractérisée en ce que** le corps en élastomère (32) s'étend sur une zone d'assise (10) de la selle de bicyclette et/ou sur une zone médiane (12) de la selle de bicyclette complètement et/ou sur une zone de la pointe de selle (14) de la selle de bicyclette.

9. Selle de bicyclette selon l'une des revendications 1 à 8, **caractérisée en ce qu'**un contour extérieur du corps en élastomère (32) et/ou un contour extérieur de la coque de selle (22) correspond(ent) à un contour extérieur de la selle de bicyclette.

10. Selle de bicyclette selon l'une des revendications 1 à 9, **caractérisée en ce que** la coque de selle (22) s'étend complètement sur une zone d'assise (10) de la selle de bicyclette et/ou sur une zone de la pointe de selle (14) de la selle de bicyclette et/ou sur une zone médiane (12) de la selle de bicyclette.

11. Selle de bicyclette selon l'une des revendications 1 à 10, **caractérisée en ce que** l'élément de support (34) présente un élément de bord de support (48) orienté à l'opposé ou vers le bas de la coque de selle (22), qui est prévu de préférence dans la zone d'assise (10) et/ou dans la zone médiane (12) et/ou dans la zone de la pointe de selle (14) et est de manière particulièrement préférée circonférentiel.

12. Selle de bicyclette selon l'une des revendications 1 à 11, **caractérisée en ce que** la coque de selle (22) présente un élément de bord de coque (50) orienté en direction de l'élément de support (34) ou vers le bas, qui est agencé de préférence dans la zone d'assise (10) et/ou dans la zone médiane (12) et/ou dans la zone de la pointe de selle (14) et est de manière particulièrement préférée circonférentiel.

13. Selle de bicyclette selon l'une des revendications 11 ou 12, **caractérisée en ce qu'**en particulier dans la zone médiane (12) un élément de maintien (56) est relié à l'élément de bord de support (48) et/ou à l'élément de bord de coque (50), qui s'étend de préférence sur au moins 50 %, en particulier au moins 70 % et de manière particulièrement préférée 75 % de la zone médiane (12) et de manière particulièrement préférée fait saillie dans la zone d'assise (10), de préférence une distance entre la coque de selle (22) et l'élément de support (34) étant en particulier complètement enjambée.

14. Selle de bicyclette selon l'une des revendications 11 à 13, **caractérisée en ce que** le corps en élastomère (34) présente un prolongement (54), qui est disposé au moins partiellement entre l'élément de bord de support (48) et l'élément de bord de coque (50).

15. Selle de bicyclette selon l'une des revendications 1 à 14, **caractérisée en ce que** le corps en élastomère recouvre au moins 70 %, de préférence au moins 80 %, de manière particulièrement préférée au moins 90 % d'une face inférieure (30) de la coque de selle (22) et/ou de l'élément de support (34).

16. Selle de bicyclette selon l'une des revendications 1 à 15, **caractérisée en ce que** le corps en élastomère (32) est au moins partiellement visible dans une vue latérale (46) de la selle de bicyclette.

17. Selle de bicyclette selon l'une des revendications 1 à 16, **caractérisée en ce que** la coque de selle (22) peut pivoter par rapport à l'élément de support (34), sous l'action d'une contrainte, autour d'un axe longitudinal (49) s'étendant dans une direction longitudinale, sur un angle de 2° à 10°, en particulier de 2° à 5°.

18. Procédé de fabrication d'une selle de bicyclette selon l'une des revendications 1 à 17, dans lequel la coque de selle (22) et l'élément de support (34) sont agencés dans un élément moulé, en particulier un moule à injection, à distance l'un de l'autre et le matériau du corps en élastomère (34) est introduit, en particulier injecté, entre la coque de selle (22) et l'élément de support (34), le rembourrage de selle (28) étant de préférence appliqué, en particulier pulvérisé, dans l'élément moulé, en particulier dans le moule à injection, sur une face supérieure de la coque de selle (22).
